# FASCICULE DE BREVET EUROPEEN

(11) **EP 1 174 239 B1**
(45) Date de publication et mention de la délivrance du brevet: **11.05.2005**
(21) Numéro de dépôt: 01401862.6
(22) Date de dépôt: 11.07.2001
(51) Int. Cl.: B29C 45/00

(54) **Procédé et moule de fabrication d'un soufflet, préforme ainsi réalisable, et soufflet**
Verfahren und Form zur Herstellung eines Balges, durch das Verfahren herstellbarer Vorformling, und Balg
Method and mould for producing a bellows, preform obtainable by the method, and bellows

(30) Priorité: 20.07.2000 FR 0009534
(43) Date de publication de la demande: 23.01.2002
(73) Titulaire: L'OREAL, 75008 Paris (FR)
(72) Inventeur: Albisetti, Nicolas, 92110 Clichy (FR)
(74) Mandataire: Tanty, François

(56) Documents cités:
- EP-A- 0 304 567
- EP-A- 0 972 624
- DE-A- 3 930 388
- PATENT ABSTRACTS OF JAPAN vol. 13, no. 25 (M-787), 20 janvier 1989 (1989-01-20) -& JP 63 237933 A (NISSEI PLASTICS IND CO), 4 octobre 1988 (1988-10-04)
- PATENT ABSTRACTS OF JAPAN vol. 11, no. 74 (M-568), 6 mars 1987 (1987-03-06) -& JP 61 228942 A (TOYODA GOSEI CO LTD), 13 octobre 1986 (1986-10-13)

## Description

La présente invention concerne un procédé de fabrication d'au moins un soufflet.

On connaît par le brevet US 5,851,476 un procédé pour fabriquer un soufflet d'étanchéité pour un mécanisme d'articulation, dans lequel on réalise par moulage par injection à un premier poste de travail une préforme rigide, cette dernière étant ensuite transportée à un second poste de travail pour y être chauffée et subir une déformation de manière à former le soufflet.

Ce procédé est relativement complexe à mettre en oeuvre en raison du transport de la préforme d'un poste à l'autre et il a également pour inconvénient d'être coûteux sur le plan énergétique puisque la préforme doit être réchauffée au second poste de travail avant d'y être déformée.

On connaît par ailleurs par le brevet US 5,490,966 un procédé pour réaliser un soufflet par moulage par injection dans un moule. Le soufflet est extrait du moule au moyen d'un dispositif pneumatique relativement compliqué.

La demande de brevet japonais JP 3-268919 décrit un soufflet réalisé par moulage par injection dans un moule. Le soufflet est moulé avec sa configuration finale et présente au niveau des plis une épaisseur réduite.

Le brevet JP 63-237933 décrit un soufflet réalisé par moulage par injection dans un moule d'une préforme comportant des zones de déformation préférentielle constituées par des gorges dirigées vers l'extérieur, le soufflet étant formé, avant que la pièce ne quitte complètement le moule, en pliant la préforme au niveau de ces zones de déformation péférentielle.

La présente invention a pour objet un nouveau procédé permettant de fabriquer d'une manière aisée au moins un soufflet.

Ce procédé est défini dans la revendication 1.

La façon de réaliser les zones de déformation preferentielle selon l'invention contribue à faciliter la formation du ou des plis du soufflet vers l'extérieur de la préforme.

Par ailleurs, le soufflet peut être réalisé entièrement au même poste de travail, ce qui procure un gain de temps.

De plus, le fait que le soufflet soit réalisé avant que la pièce ne quitte complètement le moule permet de profiter de la chaleur apportée lors du moulage de la préforme et d'éviter d'avoir à réchauffer cette dernière pour la déformer, ce qui est avantageux sur le plan énergétique.

De préférence donc, on forme le soufflet à partir de la préforme, avant le refroidissement complet de cette dernière.

L'extraction du soufflet peut également être facilitée du fait que la préforme peut être réalisée sans contre-dépouille prononcée.

En particulier, le démoulage peut s'effectuer dans l'axe du soufflet sans qu'il soit nécessaire de provoquer une extension de celui-ci au moyen d'un dispositif pneumatique tel que décrit dans le brevet US 5,490,966 précité.

Avantageusement, on réalise les zones de déformation préférentielle sous la forme de portions d'épaisseur réduite, en profitant des possibilités offertes par le moulage par injection quant au contrôle des épaisseurs.

De préférence, on forme le soufflet à partir de la préforme par déplacement axial relatif d'une première région de la préforme par rapport à une deuxième région de celle-ci, la préforme comportant au moins une zone de déformation préférentielle entre lesdites régions.

Toutes les zones de déformation préférentielle se situent de préférence entre lesdites régions.

Dans une mise en oeuvre particulière de l'invention, le moule comporte au moins une partie mobile servant à provoquer un déplacement relatif de la première région par rapport à la deuxième.

Toujours dans une mise en oeuvre particulière de l'invention, on réalise la première région de la préforme avec une partie d'accrochage apte à rester en prise avec une partie du moule durant la formation du soufflet.

La partie mobile précitée peut être constituée par une broche servant au moulage de la préforme et la partie d'accrochage peut comporter une contre-dépouille.

En variante, la partie mobile en question peut être constituée par une broche mobile comportant elle-même un noyau pouvant être déplacé par rapport au reste de la broche.

De préférence, ce noyau définit avec le reste de la broche une cavité servant au moulage de la partie d'accrochage précitée.

Dans une mise en oeuvre particulière de l'invention, dans un premier temps, après le moulage de la préforme avec la partie d'accrochage, on déplace conjointement le noyau et le reste de la broche pour former le soufflet, puis on déplace dans un deuxième temps le noyau relativement au reste de la broche pour permettre la désolidarisation du soufflet et de la broche.

Avantageusement, le noyau se désolidarise de la partie d'accrochage par déformation élastique de cette dernière.

Dans une autre mise en oeuvre particulière de l'invention, la partie mobile précitée est située à l'extérieur de la préforme et vient en appui sur cette dernière.

Cette partie mobile peut alors servir à éjecter le soufflet du moule.

De préférence, la préforme est moulée au contact d'une broche et on laisse cette dernière à l'intérieur de la préforme au moins au début de la formation du soufflet.

Cela permet d'imposer, si besoin était, la formation du ou des plis du soufflet vers l'extérieur.

La préforme peut être réalisée par moulage par injection dans une matière plastique non élastomère.

La préforme peut être moulée dans une matière thermoplastique choisie dans la liste (non limitative) suivante : polyoléfines, notamment polyéthylène ou polypropylène.

Avantageusement, la préforme est moulée avec un embout de distribution et/ou une partie de récipient et/ou une jupe de montage.

L'invention a encore pour objet une préforme selon la revendication 32, réalisable lors de la mise en oeuvre du procédé tel que défini plus haut, comportant une paroi présentant au moins une restriction permettant la création d'au moins un soufflet.

L'invention a encore pour objet un moule selon la revendication 20 pour la fabrication d'une préforme servant à la réalisation d'au moins un soufflet et pour la formation du soufflet à partir de cette préforme.

Avantageusement, le moule comporte une broche servant au moulage de la préforme et pouvant être déplacée lors du rapprochement de la première région de la deuxième, après le moulage de la préforme.

Dans une réalisation particulière, la broche est apte à coopérer avec une partie d'accrochage de la préforme afin d'entraîner une région de celle-ci dans son déplacement.

De préférence, la broche comporte une partie creuse et un noyau mobile, l'ensemble définissant une cavité servant au moulage de la partie d'accrochage.

Dans une autre réalisation particulière, la broche présente une contre-dépouille permettant d'entraîner en déplacement la première région de la préforme par rapport à la deuxième pour former le soufflet.

Le moule peut comporter un tiroir pour réaliser un embout de distribution d'un seul tenant avec la préforme.

L'invention a encore pour objet un soufflet selon la revendication 26, réalisé par moulage par injection de matière thermoplastique dans un moule.

Dans une réalisation particulière, le soufflet comporte une paroi transversale à une extrémité, traversée par un orifice central prolongé vers l'intérieur du soufflet par un ou plusieurs éléments d'accrochage.

L'invention permet de réaliser des soufflets de petites dimensions ayant un diamètre intérieur minimal inférieur ou égal à 50 mm, voire inférieur ou égal à 30 mm, voire encore voisin de 20 mm.

Dans une réalisation particulière, l'épaisseur du soufflet passe, au niveau des zones de déformation préférentielle, d'environ 0,7 à environ 0,3 mm.

Avantageusement, le soufflet est à mémoire de forme.

Le soufflet peut être réalisé d'un seul tenant avec un embout de distribution.

Le soufflet peut encore être réalisé d'un seul tenant avec une partie de récipient ou une jupe de montage.

Le soufflet peut faire partie d'un récipient ou d'une tête de distribution d'un produit.

D'autres caractéristiques et avantages de la présente invention apparaîtront à la lecture de la description détaillée qui va suivre, d'exemples non limitatifs de mise en oeuvre de l'invention, et à l'examen du dessin annexé, sur lequel :
- les figures 1 à 4 illustrent de manière schématique quatre étapes successives dans la fabrication d'une tête de distribution selon un premier exemple de mise en oeuvre de l'invention,
- la figure 5 est une coupe schématique axiale de la tête de distribution obtenue par le procédé des figures 1 à 4,
- les figures 6 à 8 illustrent de manière schématique trois étapes successives dans la fabrication d'une tête de distribution selon un deuxième exemple de mise en oeuvre de l'invention,
- les figures 9 et 10 illustrent de manière schématique deux étapes successives dans la fabrication d'une tête de distribution selon un troisième exemple de mise en oeuvre de l'invention,
- la figure 11 représente isolément et de manière schématique, en coupe axiale, la tête de distribution obtenue par le procédé des figures 9 et 10, et
- la figure 12 est une coupe axiale schématique représentant la tête de distribution de la figure 11, fixée sur un récipient.

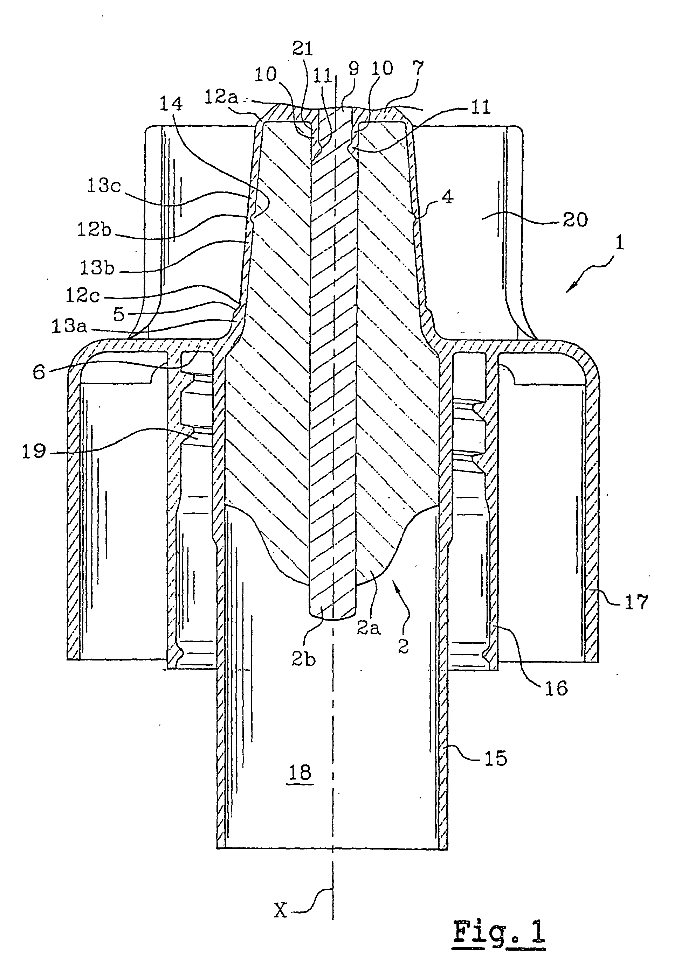

On a partiellement représenté sur la figure 1 une préforme 1 réalisée par moulage par injection de matière thermoplastique dans un moule.

Seule une broche 2 de ce moule est partiellement représentée, dans un souci de clarté du dessin.

Cette broche 2 comporte un noyau 2b mobile dans une partie creuse 2a.

La préforme 1 est réalisée, dans l'exemple décrit, en polypropylène, mais on ne sort pas du cadre de la présente invention en utilisant d'autres matériaux thermoplastiques, élastomériques ou non.

La préforme 1 est destinée à la fabrication d'une tête de distribution permettant de distribuer, de manière dosée, un produit liquide ou pâteux.

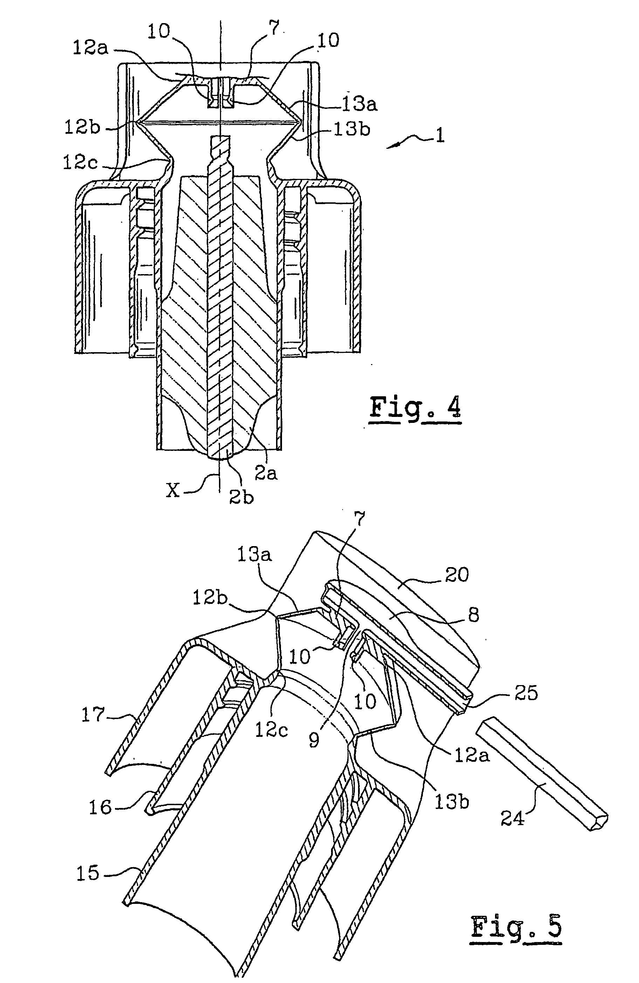

La partie supérieure de la préforme 1, constituée par un embout de distribution 8 visible sur la figure 5, n'a pas été représentée sur la figure 1, dans un souci de clarté du dessin.

La préforme 1 comporte à sa partie inférieure trois jupes tubulaires concentriques, d'axe X, à savoir une jupe intérieure 15, une jupe intermédiaire 16 et une jupe extérieure 17.

Les jupes extérieure 17 et intermédiaire 16 présentent sensiblement la même longueur.

La jupe intermédiaire 16 comporte sur sa surface intérieure un filetage 19 permettant la fixation de la tête de distribution sur le col d'un récipient.

La jupe intérieure 15 présente une forme sensiblement cylindrique de révolution, d'axe X.

Cette jupe intérieure 15 s'étend vers le bas au delà des jupes intermédiaire 16 et extérieure 17 et elle est destinée à s'engager de manière étanche dans le col du récipient précité.

Les jupes intérieure 15 et intermédiaire 16 se raccordent supérieurement à une paroi transversale 6 s'étendant perpendiculairement à l'axe X et se raccordant à la jupe extérieure 17 par un arrondi.

Deux extensions latérales 20, dont une seule est visible sur la figure 5, se raccordent inférieurement sur la paroi transversale 6, en ménageant entre elles un espace pour l'embout de distribution 8.

La préforme 1 comporte également, entre les deux extensions 20, une partie centrale déformable 4 destinée à la réalisation d'un soufflet, comme cela sera précisé plus loin.

Cette partie centrale 4 se raccorde à son extrémité supérieure à la paroi transversale inférieure 7 de l'embout 8 et se raccorde inférieurement à la jonction de la paroi transversale 6 et de la jupe intérieure 15, par une paroi 13a ayant sensiblement même épaisseur que la paroi transversale 6.

La jupe intérieure 15 définit avec la partie centrale 4 une cavité 18 occupée par la broche 2 lors du moulage.

La forme de la surface extérieure de la partie creuse 2a détermine la forme de la jupe intérieure 15 et celle de la partie centrale 4, moulées à son contact.

La partie centrale 4 présente une forme générale sensiblement tronconique, d'axe X.

La paroi 13a est prolongée vers le haut par des parois 13b et 13c.

Les parois 13a et 13b sont reliées entre elles par une portion d'épaisseur réduite 12c.

Les parois 13b et 13c sont reliées entre elles par une portion d'épaisseur réduite 12b.

La paroi 13c se raccorde à la paroi transversale 7 par une portion d'épaisseur réduite 12a.

L'épaisseur de la paroi 13b croît puis décroît lorsque l'on remonte depuis la portion 12c vers la portion 12b.

La portion 12c est réalisée grâce à un décrochement 5 formé sur la surface extérieure de la partie centrale 4.

La portion 12b est réalisée grâce à un évidement 14 formé sur la surface intérieure de la partie centrale 4.

La portion 12a est réalisée en donnant au bord périphérique de la paroi transversale 7 une forme biseautée.

Chacune des portions 12a, 12b et 12c constitue une zone de déformation préférentielle au sens de l'invention.

Dans l'exemple décrit, l'épaisseur de la partie centrale 4 est d'environ 0,3 mm au niveau des portions 12a, 12b et 12c et l'épaisseur maximale des parois 13b et 13c est d'environ 0,7 mm.

La paroi transversale 7 comporte une ouverture centrale 9 permettant à la cavité 18 de communiquer avec l'embout de distribution 8.

Trois pattes d'accrochage 10, réparties autour de l'ouverture 9, s'étendent vers le bas à l'intérieur de la cavité 18.

Chaque patte 10 comporte, à son extrémité libre, un bourrelet 11 faisant saillie radialement vers l'intérieur.

Le noyau mobile 2b présente une forme cylindrique de révolution d'axe X avec, à son extrémité supérieure, des évidements 21 permettant en coopérant avec la partie creuse 2a de réaliser les pattes 10.

La préforme 1 est moulée par injection avec la configuration représentée à la figure 1.

Un tiroir 24 représenté de manière très schématique sur la figure 5 est utilisé pour mouler le canal de sortie 25 de l'embout de distribution 8.

A l'issue du moulage de la préforme 1, la paroi transversale 7 est accrochée à la broche 2, car les pattes 10 sont prisonnières des évidements 21.

La partie creuse 2a et le noyau 2b peuvent être déplacés en translation vers le bas suivant l'axe X.

Le démoulage de la préforme 1 s'effectue peu de temps après son moulage de sorte que la préforme 1 est encore à une température suffisamment élevée pour pouvoir être déformée facilement.

Dans un premier temps, on déplace conjointement vers le bas la partie creuse 2a et le noyau 2b.

Durant ce déplacement, les pattes 10 suivent la broche 2.

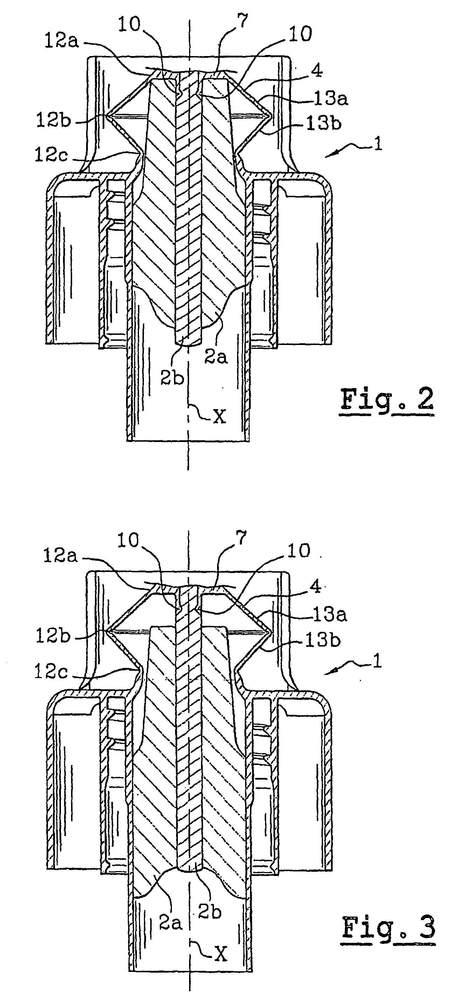

La paroi transversale 7 est ainsi entraînée en rapprochement de la jupe intérieure 15, provoquant le pliage de la partie centrale 4 au niveau des portions 12a, 12b et 12c, comme représenté sur la figure 2.

La présence de la partie creuse 2a à l'intérieur de la préforme 1 impose le pliage des parois 13b et 13a vers l'extérieur.

Le bossage de la partie creuse 2a correspondant à l'évidement 14 tend également à provoquer un pliage vers l'extérieur des parois 13a et 13b.

Une fois le soufflet formé, la partie creuse 2a est descendue par rapport au noyau 2b, ce qui libère les pattes 10, comme illustré sur la figure 3.

Celles-ci peuvent se désengager du noyau 2b par déformation élastique lorsque ce dernier est descendu davantage, pour aboutir à la configuration illustrée à la figure 4.

On remarquera que la jupe intérieure 15 se démoule très facilement, car elle est dépourvue de contre-dépouille.

Le soufflet obtenu est à mémoire de forme et présente un comportement analogue à celui d'un ressort, lors de son utilisation.

On a représenté sur la figure 5 la tête de distribution 1, après démoulage.

On voit que l'embout de distribution 8 a été réalisé d'un seul tenant avec le reste de la tête de distribution 1.

On voit également sur cette figure que les extensions latérales 20 présentent une hauteur supérieure aux hauteurs cumulées du soufflet et de l'embout de distribution 8.

Ces extensions latérales 20 limitent ainsi les risques d'une pression accidentelle sur l'embout de distribution 8.

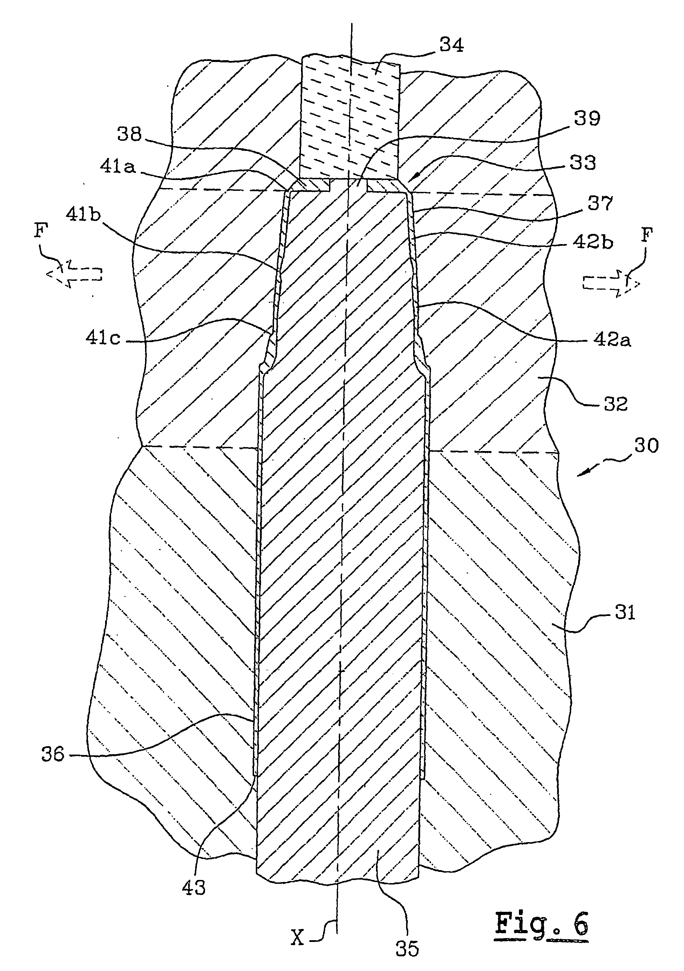

On a illustré très schématiquement avec les figures 6 à 8 un deuxième exemple de mise en oeuvre de l'invention.

On utilise ici un moule 30 comportant une partie inférieure 31 et une partie supérieure 32 permettant de réaliser, avec une broche inférieure 35 et une broche supérieure 34, une préforme 33 par moulage par injection de matière thermoplastique.

Les broches inférieure 35 et supérieure 34 sont déplaçables dans l'axe X l'une par rapport à l'autre.

La préforme 33 comporte, à sa partie inférieure, une jupe 36, d'axe X, surmontée par une partie tronconique déformable 37 destinée à former un soufflet.

La partie tronconique 37 est analogue à la partie centrale 4 précédemment décrite, et elle en diffère uniquement par le fait qu'elle se raccorde à une paroi transversale 38 dépourvue de pattes d'accrochage.

La paroi transversale 38 comporte une ouverture centrale 39 réalisée lors du moulage au moyen de la broche inférieure 35.

A l'instar de la partie centrale 4 précédemment décrite, la partie tronconique 37 comporte des parois 42a et 42b reliées par une portion d'épaisseur réduite 41b.

La paroi 42a se raccorde à la jupe 36 par une portion d'épaisseur réduite 41c.

La paroi 42b se raccorde à la paroi transversale 38 par une portion d'épaisseur réduite 41 a.

Les portions 41a, 41b et 41c sont identiques aux portions 12a, 12b et 12c précédemment décrites et constituent des zones de déformation préférentielle au sens de la présente invention.

La partie inférieure 31 comporte un épaulement annulaire 43 définissant, lors du moulage, l'extrémité inférieure de la jupe 36

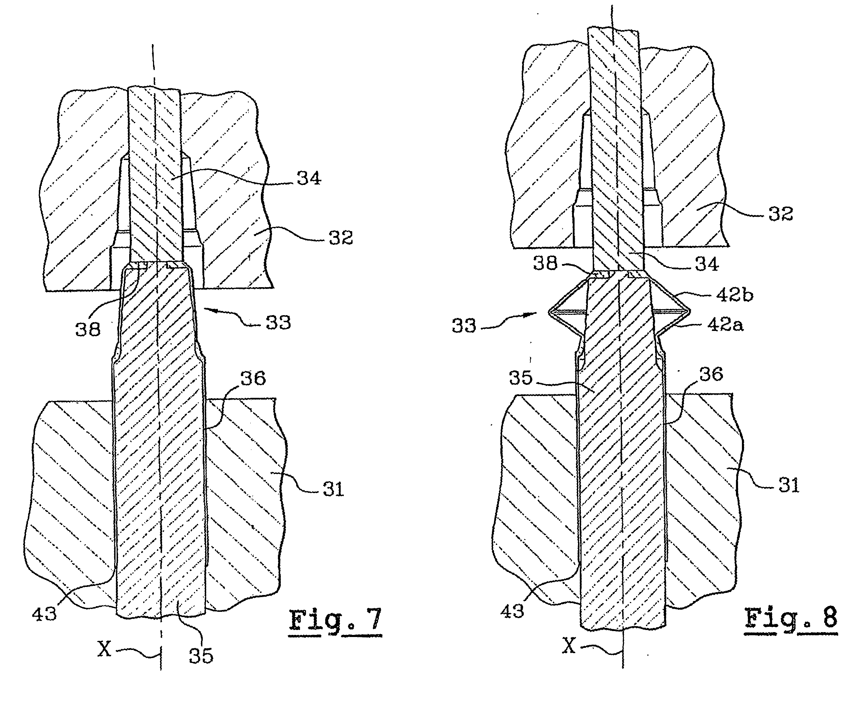

Pour démouler la préforme 33, la partie supérieure 32 est déplacée vers le haut comme représenté sur la figure 7, la partie inférieure 31 et les deux broches 34 et 35 restant immobiles.

La partie supérieure 32 remonte d'une distance suffisante pour permettre le pliage de la partie tronconique 37.

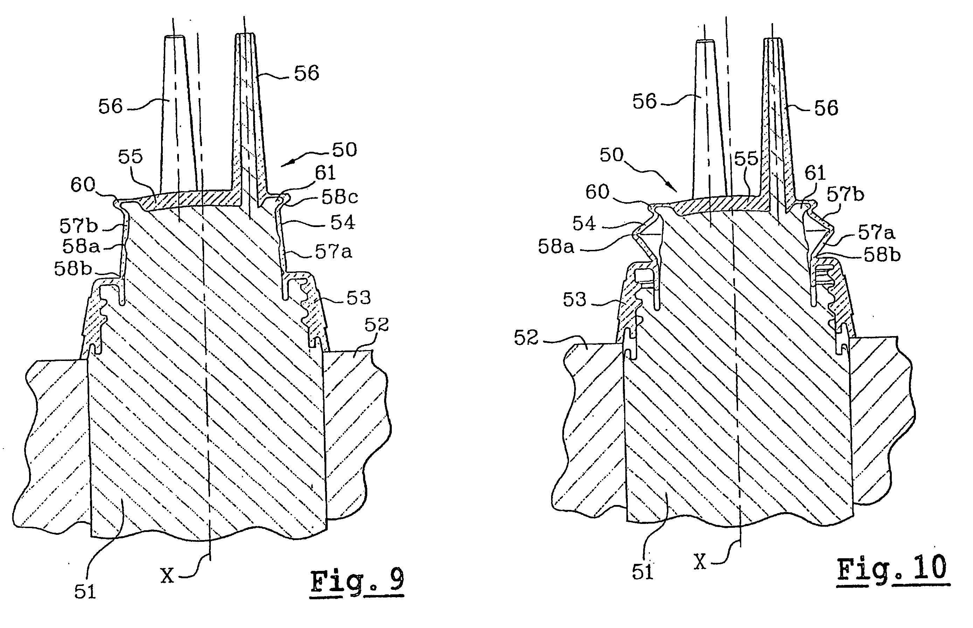

On passe de l'étape illustrée à la figure 7 à celle illustrée à la figure 8 en déplaçant conjointement vers le bas les broches 34 et 35.

L'épaulement 43 sert alors de butée pour maintenir la jupe 36 immobile.

Les broches 34 et 35 déplacent la paroi transversale 38 en rapprochement de la jupe 36, provoquant le pliage de la partie tronconique 37 au niveau des portions d'épaisseur réduite 41a, 41 b et 41c.

Après la formation du soufflet, la broche inférieure 35 peut être utilisée pour l'éjection de la pièce.

Dans une variante de mise en oeuvre de l'invention, la partie supérieure comporte en deçà d'une limite matérialisée par un trait discontinu des tiroirs pouvant s'écarter dans le sens des flèches F pour permettre de dégager d'éventuelles contre-dépouilles.

On a illustré sur les figures 9 et 10 deux étapes d'un procédé conforme à un troisième exemple de mise en oeuvre de l'invention.

On a représenté sur la figure 9 une préforme 50 réalisée par moulage par injection de matière thermoplastique dans un moule dont on n'a représenté partiellement qu'une broche 1 et une partie inférieure 52 entourant la broche 51.

Cette dernière présente à sa partie supérieure une forme adaptée à celle de la préforme à réaliser.

La partie inférieure 52 est apte à se déplacer en translation suivant l'axe X par rapport à la broche 51.

La préforme 50 comporte à sa partie inférieure une jupe de montage filetée intérieurement 53.

Cette jupe de montage 53 est surmontée par une partie déformable 54 destinée à former le soufflet.

La partie déformable 54 se raccorde supérieurement à une paroi transversale 55, laquelle supporte trois embouts de distribution 56.

La jupe de montage 53 est en appui par son extrémité inférieure sur la partie inférieure 52 du moule.

La partie déformable 54 comporte une paroi 57a et une paroi 57b reliées entre elles par une portion d'épaisseur réduite 58a.

Cette portion 58a constitue une première zone de déformation préférentielle au sens de l'invention.

La paroi 57a est reliée à la jupe de montage 53 par une portion d'épaisseur réduite 58b, constituant une seconde zone de déformation préférentielle.

La paroi 57b se raccorde à la paroi transversale 55 par une portion 58c d'épaisseur réduite, constituant une troisième zone de déformation préférentielle.

La broche 51 comporte un relief 61 en contre-dépouille dans le voisinage de la portion 58c.

La paroi transversale 55 présente une partie périphérique 60 en contre-dépouille moulée au contact du relief 61.

Cette partie périphérique 60 présente une épaisseur réduite afin de permettre le franchissement du relief 61 par déformation élastique

Sur la figure 9, le moule est représenté après enlèvement de ses éléments situés à l'extérieur de la préforme 50, au dessus de la partie inférieure 52.

On passe de l'étape illustrée à la figure 9 à celle illustrée à la figure 10 en maintenant la broche 51 immobile et en déplaçant vers le haut la partie inférieure 52.

La jupe de montage 53 étant en appui contre la partie inférieure 52, elle accompagne dans son déplacement celle-ci.

La paroi transversale 55 de la préforme 50 reste solidaire de la broche 51 au début du déplacement de la partie inférieure 52, grâce à la présence du relief 61.

On provoque ainsi un déplacement relatif de la paroi transversale 55 et de la jupe de montage 53 et la formation du soufflet par pliage de la partie déformable 54 au niveau des trois portions d'épaisseur réduite 58a, 58b et 58c.

Le déplacement vers le haut de la partie inférieure 52 se poursuit jusqu'au désengagement de la préforme 50 du relief 61, facilité par l'élasticité de la partie périphérique 60.

Dans cet exemple de mise en oeuvre de l'invention, la formation du soufflet s'effectue de manière concomitante avec l'éjection de la pièce moulée.

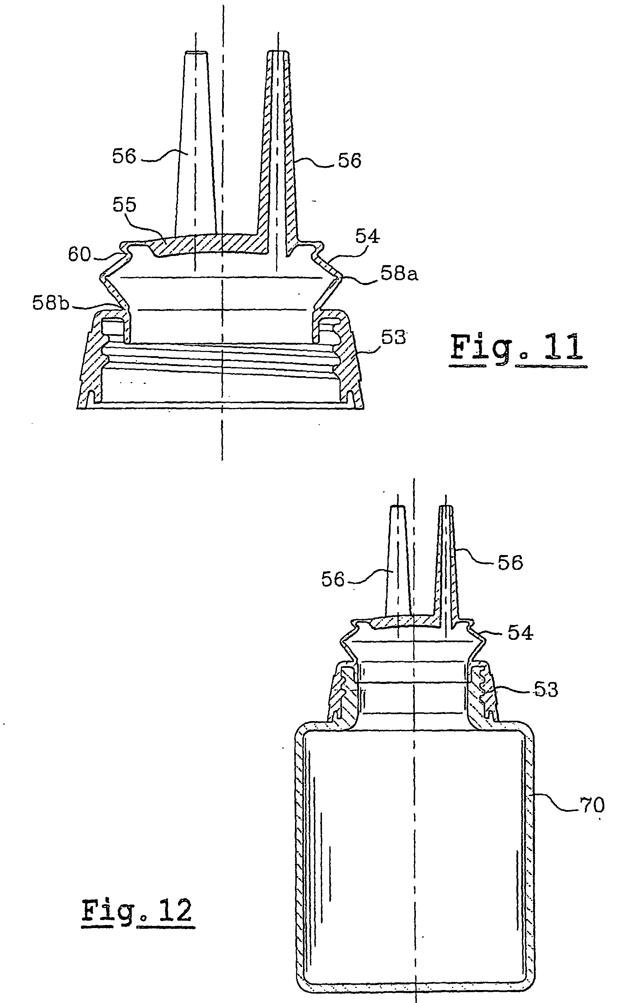

On a représenté isolément sur la figure 11 la tête de distribution obtenue à partir de la préforme 50 et destinée à être vissée sur le col d'un récipient 70, comme illustré sur la figure 12.

Le dispositif constitué du récipient 70 et de cette tête de distribution peut servir par exemple à la distribution et à l'application d'un produit sur les cheveux.

Bien sûr, l'invention n'est pas limitée aux exemples qui viennent d'être décrits.

On peut notamment réaliser des soufflets à ondes multiples sans sortir du cadre de la présente invention.

## Revendications

1. Procédé de fabrication d'au moins un soufflet en matière plastique, selon lequel l'on réalise une préforme par moulage (1 ; 33 ; 50) de matière thermoplàstique dans un moule, cette préforme (1 ; 33 ; 50) comportant au moins trois zones de déformation préférentielle (12a, 12b, 12c ; 41a, 41b, 41c ; 58a, 58b, 58c), dont une zone de déformation préférentielle intermédiaire (12b ; 41b, 58a) réalisés au moyen d'un évidement (14) donnant sur la surface inténeure de la préforme et deux autres zones de déformation préférentielle (12a, 12c; 41a, 41c ; 58b, 58c) de part et d'autre de celle-ci, puis que l'on forme, avant que la pièce ne quitte complètement le moule, le soufflet en pliant la préforme (1 ; 33 ; 50) au niveau des zones de déformation préférentielle (12a, 12b, 12c ; 41a, 41b, 41c ; 58a, 58b, 58c).

2. Procédé selon la revendication précédente, **caractérisé par le fait que** l'on forme le soufflet à partir de la préforme (1 ; 33 ; 50) avant le refroidissement complet de cette dernière.

3. Procédé selon l'une des deux revendications précédentes, **caractérisé par le fait que** l'on réalise les zones de déformation préférentielle (12a, 12b, 12c ; 41a, 41b, 41c ; 58a, 58b, 58c) sous la forme de portions d'épaisseur réduite.

4. Procédé selon l'une quelconque des revendications précédentes, **caractérisé par le fait que** l'on forme le soufflet à partir de la préforme (1 ; 33 ; 50) par déplacement axial relatif d'une première région (7 ; 38 ; 55) de la préforme par rapport à une deuxième région (15 ; 36 ; 53) de celle-ci, la préforme comportant au moins une zone de déformation préférentielle (12a, 12b, 12c ; 41a, 41b, 41c ; 58a, 58b, 58c) entre lesdites régions.

5. Procédé selon la revendication précédente, **caractérisé par le fait que** toutes les zones de déformation préférentielle (12a, 12b, 12c ; 41a, 41b, 41c ; 58a, 58b, 58c) sont situées entre lesdites régions.

6. Procédé selon l'une des revendications 4 et 5, **caractérisé par le fait que** le moule comporte au moins une partie mobile (2 ; 34 ; 35 ; 52) servant à provoquer un déplacement relatif de la première région par rapport à la deuxième.

7. Procédé selon la revendication précédente, **caractérisé par le fait que** la partie mobile (52) permet d'éjecter le soufflet du moule.

8. Procédé selon la revendication 6, **caractérisé par le fait que** l'on réalise la première région (7 ; 55) de la préforme avec une partie d'accrochage (11 ; 60) apte à rester en prise avec une partie du moule durant la formation du soufflet.

9. Procédé selon la revendication précédente, **caractérisé par le fait que** la partie mobile est constituée par une broche (51) servant au moulage de la préforme (50), la partie d'accrochage (60) comportant une contre-dépouille.

10. Procédé selon la revendication 8, **caractérisé par le fait que** la partie mobile est constituée par une broche mobile (2) comportant un noyau (2b) pouvant être déplacé par rapport au reste (2a) de la broche.

11. Procédé selon la revendication précédente, **caractérisé par le fait que** le noyau (2b) définit avec le reste de la broche (2) une cavité servant au moulage de la partie d'accrochage (11).

12. Procédé selon la revendication précédente, **caractérisé par le fait que**, dans un premier temps, après le moulage de la préforme (1) avec la partie d'accrochage (11), on déplace conjointement le noyau (2b) et le reste (2a) de la broche pour former le soufflet, puis on déplace le noyau (2b) relativement au reste (2a) de la broche pour permettre la désolidarisation du soufflet et de la broche (2).

13. Procédé selon la revendication précédente, **caractérisé par le fait que** le noyau (2b) se désolidarise de la partie d'accrochage (11) par déformation élastique de cette dernière.

14. Procédé selon la revendication 6, **caractérisé par le fait que** la partie mobile (34) est située à l'extérieur de la préforme (33) et vient en appui sur cette dernière.

15. Procédé selon l'une quelconque des revendications précédentes, **caractérisé par le fait que** la préforme (1 ; 33 ; 50) est moulée au contact d'une broche (2 ; 35 ; 51) et **par le fait que** l'on laisse cette dernière à l'intérieur de la préforme au moins au début de la formation du soufflet.

16. Procédé selon l'une quelconque des revendications précédentes, **caractérisé par le fait que** le soufflet est ouvert à ses deux extrémités.

17. Procédé selon l'une quelconque des revendications précédentes, **caractérisé par le fait que** l'on réalise la préforme (1 ; 33 ; 50) par moulage par injection dans une matière plastique non élastomère.

18. Procédé selon la revendication 17, **caractérisé par le fait que** l'on réalise la préforme (1 ; 33 ; 50) dans une matière thermoplastique choisie dans la liste suivante : polyoléfines, notamment polyéthylène ou polypropylène.

19. Procédé selon l'une quelconque des revendications précédentes, **caractérisé par le fait que** l'on moule avec la préforme (1 ; 33 ; 50) un embout de distribution (8) et/ou une partie de récipient.

20. Moule pour la fabrication d'une préforme (1 ; 33 ; 50) servant à la réalisation d'au moins un soufflet et pour la formation du soufflet à partir de cette préforme, comportant des parties de moule (2 ; 31 ; 32 ; 34 ; 35 ; 51 ; 52) agencées pour le moulage de la préforme (1 ; 33 ; 50) avec au moins trois zones de déformation préférentielle (12a, 12b, 12c ; 41a, 41b, 41c ; 58a, 58b, 58c), dont une zone de déformation préférentielle intermédiaire (12b ; 41b, 58a) réalisés au moyen d'un évidement (14) donnant sur la surface inténeure de la préforme et deux autres zones de déformation préférentielle (12a, 12c; 41a, 41c ; 58b, 58c) de part et d'autre de celle-ci, entre une première région et une deuxième région de celle-ci, et des moyens d'entraînement (2 ; 34 ; 35 ; 52) permettant de déplacer axialement, après son moulage, la première région par rapport à la deuxième.

21. Moule selon la revendication précédente, **caractérisé par le fait qu'**il comporte une broche (2 ; 35 ; 51) servant au moulage de la préforme (1 ; 33 ; 50) et pouvant être déplacée lors du rapprochement de la première région de la deuxième après le moulage de la préforme.

22. Moule selon la revendication précédente, **caractérisé par le fait que** la broche (2) est apte coopérer avec une partie d'accrochage (10) de la préforme (1) afin d'entraîner une région de celle-ci dans son déplacement.

23. Moule selon la revendication précédente, **caractérisé par le fait que** la broche (2) comporte une partie creuse (2b) et un noyau mobile (2a), l'ensemble définissant une cavité (21) servant au moulage de la partie d'accrochage (10).

24. Moule selon la revendication 21, **caractérisé par le fait que** la broche (51) présente une contre-dépouille (61) permettant d'entraîner en déplacement la première région (55) de la préforme par rapport à la deuxième (53) pour former le soufflet.

25. Moule selon l'une quelconque des revendications 20 à 24, **caractérisé par le fait qu'**il comporte un tiroir (24) pour réaliser un embout de distribution (8) d'un seul tenant avec la préforme (1).

26. Soufflet réalisé par moulage par injection de matière plastique dans un moule, comportant des zones d'épaisseur réduite constituant au moins trois zones de déformation préférentielle (12a, 12b, 12c ; 41a, 41b, 41c ; 58a, 58b, 58c), dont une zone de déformation préférentielle intermédiaire (12b ; 41b, 58a) réalisés au moyen d'un évidement (14) donnant sur la surface inténeure de la préforme et deux autres zones de déformation préférentielle (12a, 12c; 41a, 41c ; 58b, 58c) de part et d'autre de celle-ci, le soufflet présentant la trace d'une déformation à chaud.

27. Soufflet selon la revendication précédente, **caractérisé par le fait qu'**il comporte une paroi transversale (7) à une extrémité, traversée par un orifice central (9) prolongé vers l'intérieur du soufflet par un ou plusieurs éléments d'accrochage (10).

28. Soufflet selon l'une des revendications 26 et 27, **caractérisé par le fait que** son diamètre intérieur minimal est inférieur ou égal à 50 mm, voire inférieur ou égal à 30 mm, voire encore voisin de 20 mm.

29. Soufflet selon l'une quelconque des revendications 26 à 28, **caractérisé par le fait que** l'épaisseur du soufflet passe, au niveau des zones de déformation préférentielle (12a, 12b, 12c ; 41a, 41b, 41c ; 58c, 58b, 58c) d'environ 0,7 à environ 0,3 mm.

30. Soufflet selon l'une quelconque des revendications 26 à 29, **caractérisé par le fait qu'**il est réalisé d'un seul tenant avec un embout de distribution (8).

31. Soufflet selon l'une quelconque des revendications 26 à 30, **caracterisé par le fait qu'**il est ouvert à ses deux extrémités.

32. Préforme réalisables lors de la mise en oeuvre du procédé défini dans l'une quelconque des revendications 1 à 19, comportant une paroi présentant au moins une restriction permettant la création d'au moins un soufflet.

## Patentansprüche

1. Verfahren zur Herstellung mindestens eines Balgs aus Kunststoff, gemäß welchem man eine Vorform (1; 33; 50) durch Formung von Thermoplast in einer Form herstellt, wobei diese Vorform (1; 33; 50) mindestens drei Zonen bevorzugter Verformung (12a, 12b, 12c; 41 a, 41 b, 41 c; 58a, 58b, 58c) aufweist, und zwar eine mittlere Zone bevorzugter Verformung (12b; 41 b; 58a), die mit Hilfe einer an der Innenfläche der Vorform ausmündenden Aussparung (14) hergestellt ist, und zwei andere Zonen bevorzugter Verformung (12a, 12c; 41a, 41c; 58b, 58c) zu beiden Seiten von dieser, und man dann, bevor das Werkstück die Form vollständig verlässt, den Balg bildet, indem man die Vorform (1; 33; 50) auf Höhe der Zonen bevorzugter Verformung (12a, 12b, 12c; 41 a, 41 b, 41 c; 58a, 58b, 58c) faltet.

2. Verfahren nach dem vorhergehenden Anspruch, **dadurch gekennzeichnet, dass** man den Balg aus der Vorform (1; 33; 50) vor deren vollständiger Abkühlung formt.

3. Verfahren nach einem der vorhergehenden Ansprüche, **dadurch gekennzeichnet, dass** man die Zonen bevorzugter Verformung (12a, 12b, 12c; 41a, 41b, 41c; 58a, 58b, 58c) in Form von Abschnitten verringerter Dicke herstellt.

4. Verfahren nach einem der vorhergehenden Ansprüche, **dadurch gekennzeichnet, dass** man den Balg aus der Vorform (1; 33; 50) durch axiale Relativbewegung eines ersten Bereichs (7; 38; 55) der Vorform bezüglich eines zweiten Bereichs (15; 36; 53) von dieser formt, wobei die Vorform zwischen diesen Bereichen mindestens eine Zone bevorzugter Verformung (12a, 12b, 12c; 41a, 41b, 41c; 58a, 58b, 58c) aufweist.

5. Verfahren nach dem vorhergehenden Anspruch, **dadurch gekennzeichnet, dass** alle Zonen bevorzugter Verformung (12a, 12b, 12c; 41a, 41b, 41c; 58a, 58b, 58c) zwischen diesen Bereichen gelegen sind.

6. Verfahren nach einem der Ansprüche 4 und 5, **dadurch gekennzeichnet, dass** die Form mindestens einen beweglichen Teil (2; 34; 35; 52) aufweist, der dazu dient, eine Relativbewegung des ersten Bereichs bezüglich des zweiten zu erzeugen.

7. Verfahren nach dem vorhergehenden Anspruch, **dadurch gekennzeichnet, dass** der bewegliche Teil (52) gestattet, den Balg aus der Form auszustoßen.

8. Verfahren nach Anspruch 6, **dadurch gekennzeichnet, dass** man den ersten Bereich (7; 55) der Vorform mit einem Einhakteil (11; 60) herstellt, der geeignet ist, während der Bildung des Balgs mit einem Teil der Form in Eingriff zu bleiben.

9. Verfahren nach dem vorhergehenden Anspruch, **dadurch gekennzeichnet, dass** der bewegliche Teil aus einer Spindel (51) besteht, die zum Formen der Vorform (50) dient, wobei der Einhakteil (60) eine Hinterschneidung aufweist.

10. Verfahren nach Anspruch 8, **dadurch gekennzeichnet, dass** der bewegliche Teil aus einer beweglichen Spindel (2) besteht, die einen Kern (2b) aufweist, der bezüglich des Rests (2a) der Spindel bewegt werden kann.

11. Verfahren nach dem vorhergehenden Anspruch, **dadurch gekennzeichnet, dass** der Kern (2b) mit dem Rest der Spindel (2) einen Hohlraum bildet, der zum Formen des Einhakteils (11) dient.

12. Verfahren nach dem vorhergehenden Anspruch, **dadurch gekennzeichnet, dass** man in einem ersten Schritt, nach der Formung der Vorform (1) mit dem Einhakteil (11), den Kern (2b) und den Rest (2a) der Spindel zusammen bewegt, um den Balg zu formen, und dann den Kern (2b) bezüglich des Rests (2a) der Spindel bewegt, um die Trennung des Balgs und der Spindel (2) zu gestatten.

13. Verfahren nach dem vorhergehenden Anspruch, **dadurch gekennzeichnet, dass** der Kern (2b) sich von dem Einhakteil (11) durch dessen elastische Verformung trennt.

14. Verfahren nach Anspruch 6, **dadurch gekennzeichnet, dass** der bewegliche Teil (34) außerhalb der Vorform (33) gelegen ist und an dieser zur Anlage kommt.

15. Verfahren nach einem der vorhergehenden Ansprüche, **dadurch gekennzeichnet, dass** die Vorform (1; 33; 50) im Kontakt mit einer Spindel (2; 35; 51) geformt wird und dass man diese mindestens zu Beginn der Formung des Balgs im Inneren der Vorform belässt.

16. Verfahren nach einem der vorhergehenden Ansprüche, **dadurch gekennzeichnet, dass** der Balg an seinen beiden Enden offen ist.

17. Verfahren nach einem der vorhergehenden Ansprüche, **dadurch gekennzeichnet, dass** man die Vorform (1; 33; 50) durch Spritzguss aus einem Nichtelastomer-Kunststoff herstellt.

18. Verfahren nach Anspruch 17, **dadurch gekennzeichnet, dass** man die Vorform (1; 33; 50) aus einem Thermoplast herstellt, der in der folgenden Liste ausgewählt ist: Polyolefine, insbesondere Polyethylen oder Polypropylen.

19. Verfahren nach einem der vorhergehenden Ansprüche, **dadurch gekennzeichnet, dass** man mit der Vorform (1; 33; 50) einen Abgabeansatz (8) und/oder einen Behälterteil formt.

20. Form für die Herstellung einer Vorform (1; 33; 50), die zur Herstellung mindestens eines Balgs dient, und für die Formung des Balgs aus dieser Vorform, umfassend Formteile (2; 31; 32; 34; 35; 51; 52), die für die Formung der Vorform (1; 33; 50) mit mindestens drei Zonen bevorzugter Verformung (12a, 12b, 12c; 41a, 41b, 41c; 58a, 58b, 58c), und zwar einer mittleren Zone bevorzugter Verformung (12b; 41b; 58a), die mit Hilfe einer an der Innenfläche der Vorform ausmündenden Aussparung (14) hergestellt ist, und zwei anderen Zonen bevorzugter Verformung (12a, 12c; 41a, 41c; 58b, 58c) zu beiden Seiten von dieser, zwischen einem ersten Bereich und einem zweiten Bereich von dieser ausgebildet sind, und Antriebsmittel (2; 34; 35; 52), die es gestatten, den ersten Bereich bezüglich des zweiten Bereichs nach ihrer Formung axial zu bewegen.

21. Form nach dem vorhergehenden Anspruch, **dadurch gekennzeichnet, dass** sie eine Spindel (2; 35; 51) aufweist, die zur Formung der Vorform (1; 33; 50) dient und bei der Annäherung des ersten Bereichs an den zweiten nach der Formung der Vorform bewegt werden kann.

22. Form nach dem vorhergehenden Anspruch, **dadurch gekennzeichnet, dass** die Spindel (2) geeignet ist, mit einem Einhakteil (10) der Vorform (1) zusammenzuwirken, um einen Bereich von dieser in ihrer Bewegung mitzunehmen.

23. Form nach dem vorhergehenden Anspruch, **dadurch gekennzeichnet, dass** die Spindel (2) einen hohlen Teil (2b) und einen beweglichen Kern (2a) aufweist, wobei die Einheit einen Hohlraum (21) bildet, der zur Formung des Einhakteils (10) dient.

24. Form nach Anspruch 21, **dadurch gekennzeichnet, dass** die Spindel (51) eine Hinterschneidung (61) aufweist, die es gestattet, den ersten Bereich (55) der Vorform bezüglich des zweiten (53) in Bewegung zu versetzen, um den Balg zu bilden.

25. Form nach einem der Ansprüche 20 bis 24, **dadurch gekennzeichnet, dass** sie einen Schieber (24) aufweist, um einen Abgabeansatz (8) einstückig mit der Vorform (1) herzustellen.

26. Durch Spritzgießen von Kunststoff in einer Form hergestellter Balg, umfassend Zonen verringerter Dicke, die mindestens drei Zonen bevorzugter Verformung (12a, 12b, 12c; 41a, 41b, 41c; 58a, 58b, 58c) bilden, und zwar eine mittlere Zone bevorzugter Verformung (12b; 41 b; 58a), die mit Hilfe einer an der Innenfläche der Vorform ausmündenden Aussparung (14) hergestellt ist, und zwei andere Zonen bevorzugter Verformung (12a, 12c; 41 a, 41 c; 58b, 58c) zu beiden Seiten von dieser, wobei der Balg die Spur einer Warmverformung aufweist.

27. Balg nach dem vorhergehenden Anspruch, **dadurch gekennzeichnet, dass** er an einem Ende eine Querwand (7) aufweist, die von einer zentralen Öffnung (9) durchsetzt ist, die auf das Innere des Balgs zu durch ein oder mehrere Einhakelemente (10) verlängert ist.

28. Balg nach einem der Ansprüche 26 und 27, **dadurch gekennzeichnet, dass** sein kleinster Innendurchmesser kleiner als oder gleich 50 mm oder kleiner als oder gleich 30 mm oder auch etwa 20 mm ist.

29. Balg nach einem der Ansprüche 26 bis 28, **dadurch gekennzeichnet, dass** die Dicke des Balgs auf Höhe der Zonen bevorzugter Verformung (12a, 12b, 12c; 41a, 41b, 41c; 58a, 58b, 58c) von etwa 0,7 auf etwa 0,3 mm übergeht.

30. Balg nach einem der Ansprüche 26 bis 29, **dadurch gekennzeichnet, dass** er einstückig mit einem Abgabeansatz (8) ausgeführt ist.

31. Balg nach einem der Ansprüche 26 bis 30, **dadurch gekennzeichnet; dass** er an seinen beiden Enden offen ist.

32. Vorform, die bei der Durchführung des in einem der Ansprüche 1 bis 19 definierten Verfahrens herstellbar ist, umfassend eine Wand, die mindestens eine Einengung besitzt, die die Schaffung mindestens eines Balgs gestattet.

## Claims

1. A method of manufacturing at least one bellows of plastic material, wherein a preform (1; 33; 50) is made by molding thermoplastic material in a mold, the preform (1; 33; 50) having at least three preferred deformation zones (12a, 12b, 12c; 41a, 41b, 41c; 58a, 58b, 58c), including an intermediate preferred deformation zone (12b; 41b; 58a) formed by means of a recess (14) opening out on the inside surface of the preform, and two other preferred deformation zones (12a, 12c; 41a, 41c; 58b, 58c) on either side thereof, after which, prior to the part completely leaving the mold, the bellows is formed by folding the preform (1; 33; 50) in its preferred deformation zones (12a, 12b, 12c; 41a, 41b, 41c; 58a, 58b, 58c.

2. A method according to the preceding claim, **characterized by** the fact that the bellows is made from the preform (1; 33; 50) before the preform has cooled down completely.

3. A method according to either one of the two preceding claims, **characterized by** the fact that the preferred deformation zones (12a, 12b, 12c; 41a, 41b, 41c; 58a, 58b, 58c) are made in the form of areas of reduced thickness.

4. A method according to any preceding claim, **characterized by** the fact that the bellows is formed from the preform (1; 33; 50) by moving a first region (7; 38; 55) of the preform axially relative to a second region (15; 36; 53) thereof, the preform having at least one preferred deformation zone (12a, 12b, 12c; 41a, 41b, 41c; 58a, 58b, 58c) between said regions.

5. A method according to the preceding claim, **characterized by** the fact that all of the preferred deformation zones (12a, 12b, 12c; 41a, 41b, 41c; 58a, 58b, 58c) are situated between said regions.

6. A method according to claim 4 or claim 5, **characterized by** the fact that the mold has at least one moving portion (2; 34; 35; 52) serving to cause the first region to move relative to the second.

7. A method according to the preceding claim, **characterized by** the fact that the moving portion (52) enables the bellows to be ejected from the mold.

8. A method according to claim 6, **characterized by** the fact that the first region (7; 55) of the preform is made with a coupling portion (11; 60) suitable for remaining engaged with a portion of the mold while the bellows is being formed.

9. A method according to the preceding claim, **characterized by** the fact that the moving portion is constituted by a pin (51) serving for molding the preform (50), with the coupling portion (60) including an undercut.

10. A method according to claim 8, **characterized by** the fact that the moving portion is constituted by a moving pin (2) including a core (2b) capable of being moved relative to the remainder (2a) of the pin.

11. A method according to the preceding claim, **characterized by** the fact that the core (2b) co-operates with the remainder of the pin (2) to define a cavity for molding the coupling portion (11).

12. A method according to the preceding claim, **characterized by** the fact that after the preform (1) has been molded together with its coupling portion (11), the core (2b) and the remainder (2a) of the pin are initially moved together in order to form the bellows, after which the core (2b) is moved relative to the remainder (2a) of the pin to enable the bellows to be separated from the pin (2).

13. A method according to the preceding claim, **characterized by** the fact that the core (2b) is separated from the coupling portion (11) by elastically deforming the coupling portion.

14. A method according to claim 6, **characterized by** the fact that the moving portion (34) is situated outside the preform (33) and is brought to bear thereagainst.

15. A method according to any preceding claim, **characterized by** the fact that the preform (1; 33; 50) is molded in contact with a pin (2; 35; 51), and by the fact that the pin is left inside the preform at least during the beginning of bellows formation.

16. A method according to any preceding claim, **characterized by** the fact that the bellows is open at both ends.

17. A method according to any preceding claim, **characterized by** the fact that the preform (1; 33; 50) is made by injection molding a non-elastomer plastics material.

18. A method according to claim 17, **characterized by** the fact that the preform (1; 33; 50) is made of a thermoplastic material selected from the following list: polyolefins, in particular polyethylene or polypropylene.

19. A method according to any preceding claim, **characterized by** the fact that a dispenser endpiece (8) and/or a receptacle portion is molded together with the preform (1; 33; 50).

20. A mold for manufacturing a preform (1; 33; 50) for making at least one bellows and for forming the bellows from said preform, comprising mold portions (2; 31; 32; 34; 35; 51; 52) arranged to mold the preform (1; 33; 50) with at least three preferred deformation zones (12a, 12b, 12c; 41a, 41b, 41c; 58a, 58b, 58c), including an intermediate preferred deformation zone (12b; 41b; 58a) formed by means of a recess (14) opening out on the inside surface of the preform, and two other preferred deformation zones (12a, 12c; 41a, 41c; 58b, 58c) on either side thereof, between a first region and a second region thereof, and drive means (2; 34; 35; 52) enabling the first region, once it has been molded, to be moved axially relative to the second region.

21. A mold according to the preceding claim, **characterized by** the fact that it includes a pin (2; 35; 51) for molding the preform (1; 33; 50), and that is capable of being moved while the first region is being moved towards the second region after the preform has been molded.

22. A mold according to the preceding claim, **characterized by** the fact that the pin (2) is suitable for co-operating with a coupling portion (10) of the preform (1) so as to drive the movement thereof.

23. A mold according to the preceding claim, **characterized by** the fact that the pin (2) comprises a hollow portion (2b) and a moving core (2a), together defining a cavity (21) serving for molding a coupling portion (10).

24. A mold according to claim 21, **characterized by** the fact that the pin (51) has an undercut (61) enabling the first region (55) of the preform to be moved relative to the second region (53) to form the bellows.

25. A mold according to any one of claims 20 to 24, **characterized by** the fact that it includes a slide (24) for forming a dispenser endpiece (8) integrally with the preform (1).

26. A bellows made by injection molding a plastics material in a mold, the bellows including zones of reduced thickness constituting at least three preferred deformation zones (12a, 12b, 12c; 41a, 41b, 41c; 58a, 58b, 58c), including an intermediate preferred deformation zone (12b; 41b; 58a) formed by means of a recess (14) opening out on the inside surface of the preform, and two other preferred deformation zones (12a, 12c; 41a, 41c; 58b, 58c) on either side thereof, the bellows presenting traces of being deformed while hot.

27. A bellows according to the preceding claim, **characterized by** the fact that it includes a transverse wall (7) at one end, the wall being pierced by a central orifice (9) extended inside the bellows by one or more coupling elements (10).

28. A bellows according to claim 26 or claim 27, **characterized by** the fact that its minimum inside diameter is less than or equal to 50 mm, or less than or equal to 30 mm, or indeed is close to 20 mm.

29. A bellows according to any one of claims 26 to 28, **characterized by** the fact that the thickness of the bellows in the preferred deformation zones (12a, 12b, 12c; 41a, 41b, 41c; 58a, 58b, 58c) passes from about 0.7 mm to about 0.3 mm.

30. A bellows according to any one of claims 26 to 29, **characterized by** the fact that it is made integrally with a dispenser endpiece (8).

31. A bellows according to any one of claims 26 to 30, **characterized by** the fact that it is open at its both ends.

32. A preform to be made during implementing the method defined in any one of claims 1 to 19, having a wall presenting at least one constriction enabling at least one bellows to be created therein.
